# EUROPEAN PATENT APPLICATION

(11) **EP 4 811 774 A1**
(43) Date of publication of application: **23.09.2026**
(21) Application number: 25305351.6
(22) Date of filing: 17.03.2025
(51) Int. Cl.: H04N 19/11, H04N 19/176, H04N 19/593

(54) **NEURAL NETWORK BASED INTRA IN TIMD, DIMD AND SGPM**

(71) Applicant: InterDigital CE Patent Holdings, SAS, 75017 Paris (FR)
(72) Inventor: NASER, Karam, 35250 MOUAZE (FR); DUMAS, Thierry, 35700 RENNES (FR); CHEN, Ya, 35700 RENNES (FR); LE LEANNEC, Fabrice, 35830 BETTON (FR)
(74) Representative: Interdigital

(57) **Abstract**

A method and apparatus for video encoding/decoding are provided. For a current block of an image of a video encoded using a compound intra prediction mode, a first intra predictor is obtained from among a first set of intra predictors wherein the first set of intra predictors comprising at least one intra predictor being a neural-network-based intra predictor. At least one second intra predictor is obtained from among a second set of intra predictors. A prediction is obtained for the current block by combining the first intra predictor and the at least one second intra predictor and the current block is encoded or decoded based on the prediction. In a variant, a planar mode is used as a representative of the neural-network-based intra predictor for cost calculation.

## Description

### BACKGROUND

The present application is related to video compression. The present embodiments relate to a method and an apparatus for encoding or decoding an image or a video. More particularly, the present embodiments relate to neural network based intra prediction in compound intra prediction modes such as TIMD, DIMD, OBIC or SGPM.

To achieve high compression efficiency, image and video coding schemes usually employ prediction and transform to leverage spatial and temporal redundancy in the video content. Generally, intra or inter prediction is used to exploit the intra or inter picture correlation, then the differences between the original block and the predicted block, often denoted as prediction errors or prediction residuals, are transformed, quantized, and entropy coded. In inter prediction, motion vectors used in motion compensation are often predicted from motion vector predictor. To reconstruct the video, the compressed data are decoded by inverse processes corresponding to the entropy coding, quantization, transform, and prediction.

### BRIEF SUMMARY

Briefly stated, in one embodiment, a method for encoding an image or a video is provided, wherein for a current block of an image of a video, a first intra predictor is obtained from among a first set of intra predictors wherein the first set of intra predictors comprising at least one intra predictor being a neural-network-based intra predictor. At least one second intra predictor is obtained from among a second set of intra predictors. A prediction is obtained for the current block by combining the first intra predictor and the at least one second intra predictor and the current block is encoded based on the prediction.

In another embodiment, a method for decoding an image or a video is provided, wherein for a current block of an image of a video, a first intra predictor is obtained from among a first set of intra predictors wherein the first set of intra predictors comprising at least one intra predictor being a neural-network-based intra predictor. At least one second intra predictor is obtained from among a second set of intra predictors. A prediction is obtained for the current block by combining the first intra predictor and the at least one second intra predictor and the current block is decoded or reconstructed based on the prediction.

In another embodiment, an apparatus for encoding an image or a video is provided, wherein the apparatus comprises one or more processors configured to, for a current block of an image of a video, obtain a first intra predictor from among a first set of intra predictors wherein the first set of intra predictors comprising at least one intra predictor being a neural-network-based intra predictor, obtain at least one second intra predictor from among a second set of intra predictors, obtain a prediction for the current block by combining the first intra predictor and the at least one second intra predictor and encode the current block based on the prediction. In another embodiment, an apparatus for decoding an image or a video is provided, wherein the apparatus comprises one or more processors configured to, for a current block of an image of a video, obtain a first intra predictor from among a first set of intra predictors wherein the first set of intra predictors comprising at least one intra predictor being a neural-network-based intra predictor, obtain at least one second intra predictor from among a second set of intra predictors, obtain a prediction for the current block by combining the first intra predictor and the at least one second intra predictor and decode or reconstruct the current block based on the prediction.

In a variant, a planar mode is used as a representative of the neural-network-based intra predictor for determining distortion cost for the neural-network-based intra predictor when obtaining the first intra predictor.

One or more embodiments also provide a computer program comprising instructions which when executed by one or more processors cause the one or more processors to perform any one of the methods for encoding or decoding an image or a video according to any of the embodiments described herein. One or more of the present embodiments also provide a non-transitory computer readable medium and/or a computer readable storage medium having stored thereon instructions for encoding or decoding an image or a video according to the methods described herein.

One or more embodiments also provide a computer readable storage medium having stored thereon a bitstream generated according to the methods described herein. One or more embodiments also provide a method and apparatus for transmitting or receiving the bitstream generated according to the methods described above.

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings. In the drawings:
FIG. 1 is a block diagram illustrating an example system according to one or more embodiments of the present disclosure;
FIG. 2 is a block diagram illustrating an example video encoder according to one or more embodiments of the present disclosure;
FIG. 3 is a block diagram illustrating an example video decoder according to one or more embodiments of the present disclosure;
FIG. 4 illustrates an example of N reference samples to predict a given W × H luma CB, if H≥8 &&W≥8, t= 8 else t=4;
FIG. 5 illustrates an example of an architecture of 4x4 (N=80) and 8x4 (N=112) neural-network models shown as sequential matrix multiplications and LeakyReLUs (piece-wise linear functions);
FIG. 6 illustrates an example of an architecture of 16x4 (N=176), 8x8 (N=320) and 16x8 (N=448) neural-network models shown as sequential matrix multiplications and LeakyReLUs (piece-wise linear functions);
FIG. 7 illustrates an example of an architecture of 16x16 neural-network model shown as sequential matrix multiplications and LeakyReLUs (piece-wise linear functions);
FIG. 8 illustrates an example of edge operator options in DIMD mode;
FIG. 9 illustrates an example of non-adjacent spatial neighboring candidates for OBIC mode;
FIG. 10 illustrates examples of spatial GPM candidates signaling
FIG. 11 illustrates an example of GPM template;
FIG. 12 illustrates an example of GPM blending;
FIG. 13 illustrates an example of a method for encoding or decoding a block of an image according to an embodiment;
FIG. 14 illustrates an example of a method for determining a prediction in a TIMD mode having a neural-network-based intra predictor, according to an embodiment;
FIG. 15 illustrates an example of a method for determining a prediction in a DIMD mode or OBIC mode having a neural-network-based intra predictor, according to an embodiment;
FIG. 16 illustrates an example of a method for determining a prediction in a SGPM mode having a neural-network-based intra predictor, according to an embodiment;
FIG. 17 shows two remote devices communicating over a communication network in accordance with an example of the present principles.
FIG. 18 shows the syntax of a signal in accordance with an example of the present principles.

### DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

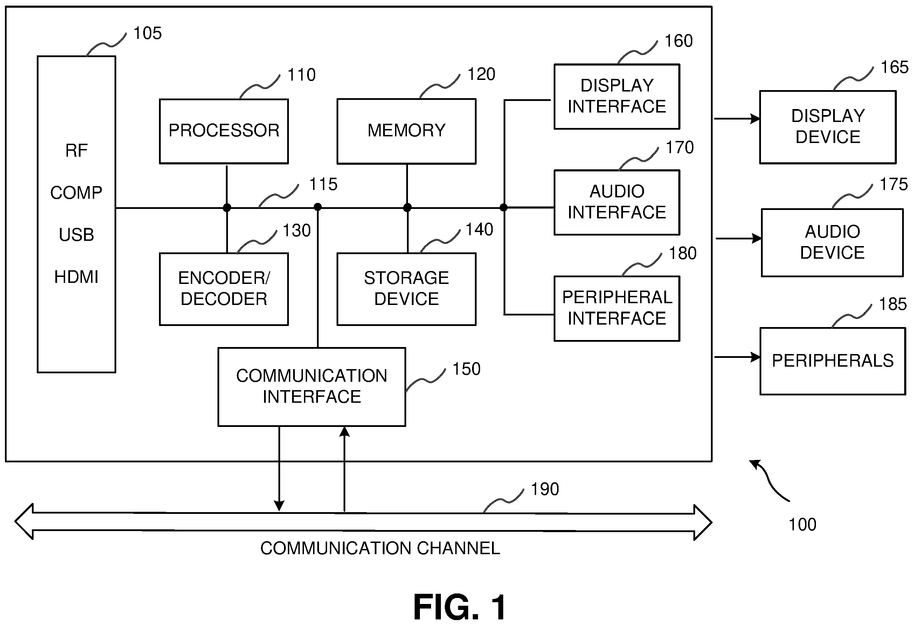

Referring to the drawings, there is shown in FIG. 1 a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 includes at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 includes at least one memory 120, for example, a volatile memory device and/or a non-volatile memory device. The system 100 includes a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 includes an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 is used to store instructions and/or provide working memory for video encoding and decoding functions. In some embodiments, memory external to the processor 110 and/or the encoder/decoder module 130 (e.g., the memory 120 and/or the storage device 140) is used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 includes a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

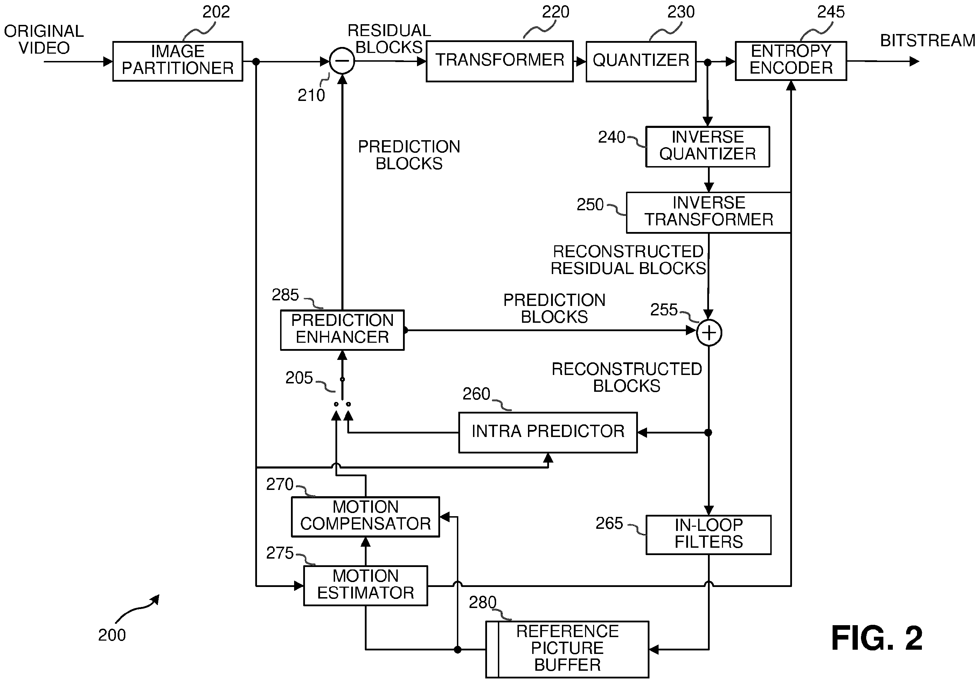

FIG. 2 is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (VVC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

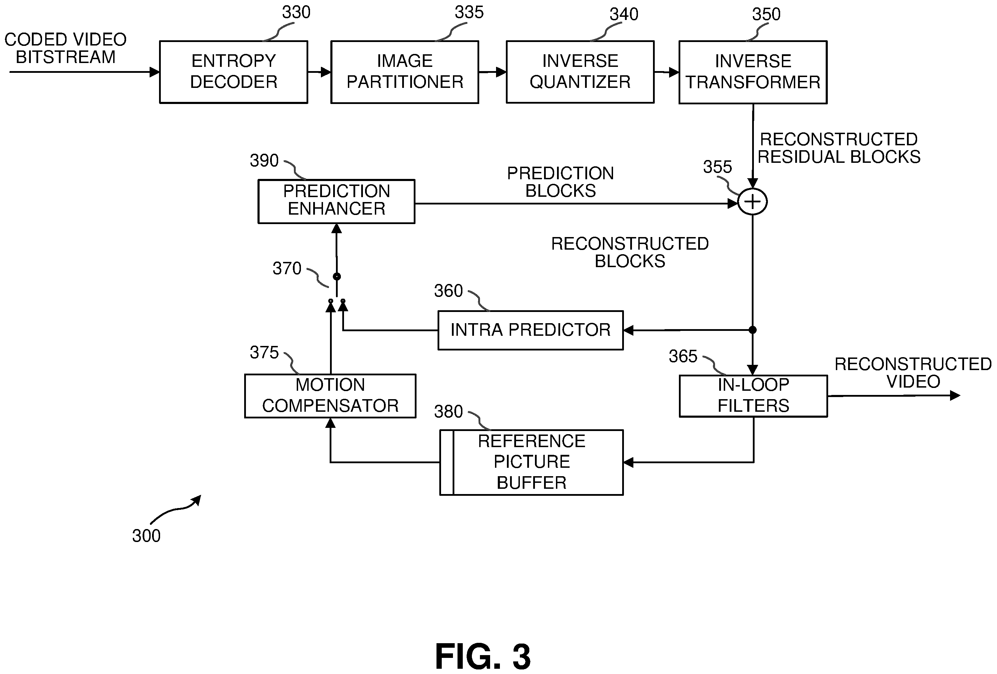

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, Y, and chroma components, *U* and *V* (also denoted herein by C).

Referring generally to FIG. 2 and the video encoder 200, video data (e.g., one or more video frames) is encoded generally as described below. Prior to encoding, video data may be pre-processed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

**In** general, a CU includes a luma block and associated chroma blocks. As such, functions of the video encoder 200 described herein as applied to a CU refer generally to the luma block and the respective chroma blocks. The CUs may be encoded using an intra prediction mode performed by an intra predictor 260. **In** intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (i.e., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are de-quantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

FIG. 3 is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340 and inverse transformed by an inverse transformer 350 to decode (reconstruct) respective residual blocks. Depending on the selected prediction mode, a predicted block can be obtained at 370 from an intra predictor 360 (i.e., intra prediction) or from a motion compensator 375 (i.e., inter prediction) and may be enhanced (e.g., filtered) by a prediction enhancer 390, generating a prediction block. The reconstructed residual blocks are combined with prediction blocks (e.g. by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 2. The post-decoding processor can use metadata derived by the pre-encoding processor and/or signaled in the video bitstream.

Embodiments described herein aim at improving intra prediction. Some embodiments aim at improving the prediction quality by employing a neural network based intra prediction (NN intra) in compound intra modes, such as TIMD, DIMD, OBIC or SGPM. In some implementations, these compound intra modes use a template of a current block to predict to determine the intra predictors that are combined by the compound intra mode. In some embodiments, the planar mode used in a compound intra mode is replaced by a NN intra to improve the prediction quality and the overall bd-rate gain.

The embodiments described herein can be implemented in a video encoder (200 in FIG. 2), for example in the intra predictor module (260), and in a video decoder (300 in FIG. 3) for example in the intra predictor module (360).

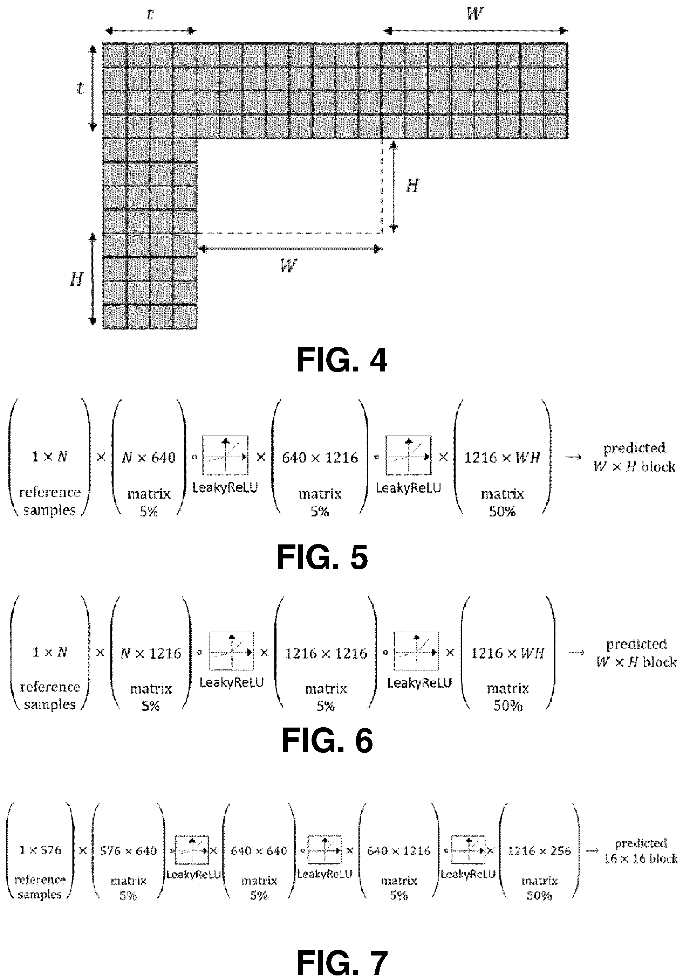

The neural network-based prediction has recently been introduced to ECM as an additional intra prediction mode. The neural network-based intra prediction mode contains 6 neural networks, each predicting luma CBs of a different size in {4 × 4, 8 × 4, 16 × 4, 8 × 8, 16 × 8, 16 × 16}. For a given W × *H* luma CB, the used neural network takes the context made of *N* reference samples around this luma CB, see FIG. 4, to return the *W* × *H* predicted block. For block sizes non natively supported by a model, similarly to MIP (Matrix-based intra prediction) in VVC, the reference samples are transposed and/or down sampled.

The architectures of the models are detailed in FIG. 5, 6, and 7. The number of non-zero weights for each weight matrix is displayed (shown as the percentage 5%, 50%). A sparse vector-matrix multiplication processes chunks of 8 non-zero coefficientsError! Reference source **not** found.. The LeakyReLU used is defined as a piecewise-linear function: $LeakyReLU \left(x\right) = \left\{\begin{matrix}x , x \geq 0 \\ x ≫ 4 , x < 0\end{matrix}\right.$

Matrix weights are known to both the encoder and decoder.

For the current *W* × *H* luma CB whose top-left pixel is located at *(x, y)* in the current luma channel, if a neural network can predict luma CB of this size and the context of this luma CB does not go out of the bounds of the current luma channel, i.e. *x* ≥ *t && y* ≥ *t,* the neural network-based intra prediction mode is signaled via a NN flag placed after the BDPCM (Bidirectional PCM - Pulse Code Modulation) flag and before the DIMD flag.

For a given luma CB selecting the neural network-based intra prediction mode, regarding the implicit transform mapping in MTS and LFNST/NSPT, the equivalent intra prediction mode is derived by applying DIMD to the predicted block returned by the used neural network.

For a given luma CB of size larger than 64 luma samples and selecting the neural network-based intra prediction mode, an alternative equivalent intra prediction mode is used for LFNST/NSPT. Indeed, in addition to the 1^{st} equivalent intra prediction mode obtained by applying DIMD to the predicted block, PLANAR is used as additional equivalent intra mode candidate. In this case, a CU-level flag is signaled that indicates the equivalent intra mode index among the two equivalent intra mode candidate is signaled.

Some compound intra modes that can be implemented in the video encoder of FIG. 2 and video decoder of FIG. 3 are described below.

### Decoder side Intra Mode Derivation (DIMD)

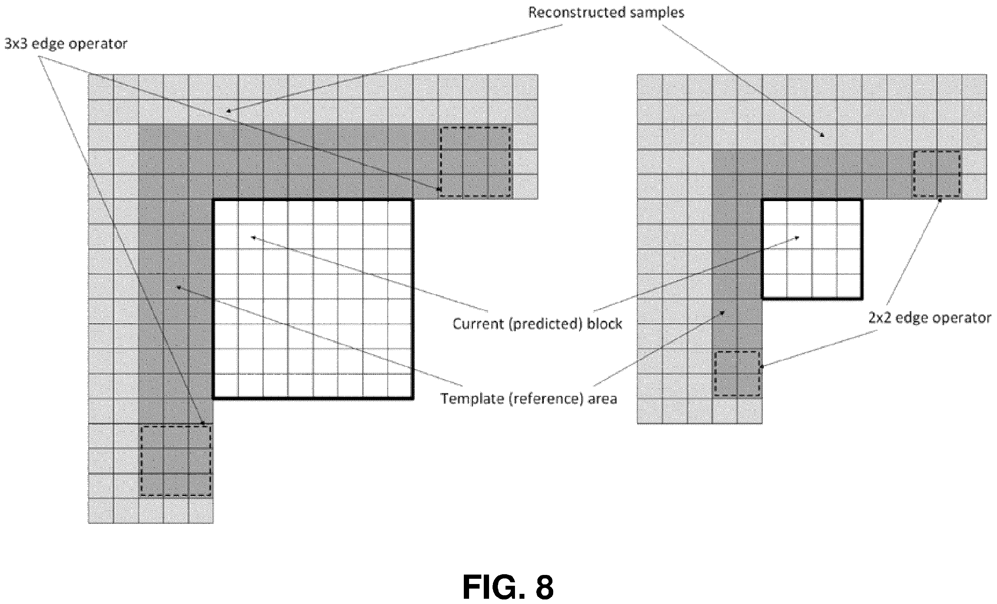

When DIMD is applied, a number of intra modes are derived from the reconstructed neighbor samples by computing a histogram of gradients (HoG), which is built by applying edge operators to a reference area. The edge operators are used to derive the direction and magnitude (amplitude) of gradients within the area covered by an edge operator. As described in JVET-AI0140 (JVET-AI0140, Non-EE2: On DIMD edge operators, V. Rufitskiy, A. Filippov, J. Konieczny, H. Qin, T. Dong, Z. Xu, 35th meeting, Sapporo, JP, 12-19 July 2024*)* and JVET-AJ0203 (JVET-AJ0203, EE2-2.11: DIMD with 2x2 edge operator applied to small blocks, A. Filippov, V. Rufitskiy, J. Konieczny, H. Qin, T. Dong, Z. Xu, 36th meeting, Kemer, TR, 1-8 November 2024*),* the selection of an edge operator that should be applied to the reference area, is based on the size of a current (predicted) block. As FIG. 8 illustrates,

The horizontal F*ₓ* and vertical F*_{y}* filters of the 2x2 operator are defined as follows: ${F}_{x} = \left[\begin{matrix}- 1 & - 1 \\ 1 & 1\end{matrix}\right] ,$ ${F}_{y} = \left[\begin{matrix}1 & - 1 \\ 1 & - 1\end{matrix}\right]$

The horizontal F*ₓ* and vertical F*_{y}* filters of the 3x3 operator are defined as follows: ${F}_{x} = \left[\begin{matrix}- 1 & - 2 & - 1 \\ 0 & 0 & 0 \\ 1 & 2 & 1\end{matrix}\right] ,$ ${F}_{y} = \left[\begin{matrix}1 & 0 & - 1 \\ 2 & 0 & - 2 \\ 1 & 0 & - 1\end{matrix}\right]$

In particular, up to seven intra modes are derived if the block size area is larger or equal than 128 samples, and up to five intra modes are derived otherwise. Each derived intra mode is used to form an intra predictor. These predictors are combined with the non-directional predictor (planar or block vector-based predictor) with the weights derived from the histogram of gradients as described in JVET-O0449 *(*JVET-O0449, Non-CE3: Decoder-side Intra Mode Derivation (DIMD) with prediction function using Planar, M. Abdoli, T. Guionnet, E. Mora, M. Raulet, S. Blasi, A. Seixas Dias, G. Kulupana, 15th meeting, Gothenburg, SE, 3-12 July 2019*)* and JVET-AJ0267 (JVET-AJ0267, EE2-2.10: Adaptive HoG for DIMD, S. Blasi, J. Lainema, 36th meeting, Kemer, TR, 1-8 November 2024*).* The decision between for the non-directional modes is taken according to the template cost. Specifically, the block vectors of all adjacent and non-adjacent merge candidates (coded in IntraTMP - Intra Template-based Matching Prediction - or IBC - Intra Block Copy -) are compared to planar prediction on the reconstructed template. The template cost (SATD) is used to select the best predictor among them.

The histogram of gradients for the templates above, left and left-above is computed separately. The computation of the histogram of gradients for the template above-left is as described in *JVET-O0449.* For intra slices, in case the block size area is smaller than 128 samples, then the histogram of gradients for the templates above and left is also computed as described in *JVET-O0449.* Otherwise, the computation of the histogram of gradients for the templates above and left is modified according to *JVET-AJ0267,* so that an adaptive number of template samples is considered. For each sample in the template above or left, a direction and amplitude are computed according to *JVET-00449* and the histogram is updated accordingly. The amplitude is scaled with a weight extracted using the distance from the current block from the following LUT:
WeightTable[12] = {4, 4, 2, 2, 1, 1, 1, 1, 1, 1, 1, 1}.

In addition, a support direction is computed on the sample immediately above the current sample (for the template above) or on the sample immediately on the left of the current sample (for the template left). If the absolute difference between the support direction and the computed direction for the current sample is smaller or equal than one, than the amplitude is scaled as follows: $Amp = Amp + \left(Amp≫3\right) .$

The total sum of all amplitudes in the histogram is then calculated. The computation of the histogram of gradients is terminated in case this total sum exceeds a pre-determined threshold, otherwise, another template sample is considered, where samples are extracted from an extended template comprising more lines above and more lines of the left of the current block, up to a maximum of 12 lines. The threshold is computed as follows. First, the DIMD template size S is computed according to *JVET-O0449.* This is then scaled by a pre-determined factor *F.* For the template above, if the block above the current block has a height greater than 8 samples, and it has a width greater or equal than the width of the current block, then F = 2200, otherwise, *F* = 1700. Similarly for the template left, if the block on the left of the current block has a width greater than 8 samples, and it has a height greater or equal than the height of the current block, then *F* = 2200, otherwise, *F* = 1700. The threshold is then computed as the product of *S* and *F*.

The division operations in weight derivation are performed utilizing the same lookup table (LUT) based integerization scheme used by the CCLM (Cross-Component Linear Model). For example, the division operation in the orientation calculation $Orient = {G}_{y} / {G}_{x}$

is computed by the following LUT-based scheme: $x = Floor \left(Log2\left(Gx\right)\right)$ $normDiff = \left(\left(Gx≪4\right)≫x\right) & 15$ $x + = \left(3+\left(normDiff !=0\right)? 1:0\right)$ $Orient = \left(Gy*\left(\left.DivSigTable\left[normDiff\right]\right|8\right)+\left(1≪\left(x-1\right)\right)\right) ≫ x$ where $DivSigTable \left[16\right] = \left\{0, 7, 6, 5, 5, 4, 4, 3, 3, 2, 2, 1, 1, 1, 1, 0\right\} .$

For a block of size *W* × *H,* the weight for each of the five derived modes is modified if the one the above or left histogram magnitudes is twice larger than the other one. In this case, the weights are location dependent and computed as follows:
If the above histogram is twice the left, then: ${w}_{i} \left(x, y\right) = {wDimd}_{i} + {Δ}_{i} - 2 {Δ}_{i} \frac{y}{\left(H-1\right)} .$
If the left histogram is twice the above, then: ${w}_{i} \left(x, y\right) = {wDimd}_{i} + {Δ}_{i} - 2 {Δ}_{i} \frac{x}{\left(W-1\right)} ,$
where *wDimdᵢ* is the unmodified uniform weight of the DIMD selected as in *JVET-O0449,* Δ*ᵢ* is pre-defined and set to 10.

Derived intra modes are included into the primary list of intra most probable modes (MPM), so the DIMD process is performed before the MPM list is constructed. The primary derived intra mode of a DIMD block is stored with a block and is used for MPM list construction of the neighboring blocks.

Finally, note the region of neighboring reconstructed samples used for computing the histogram of gradients is modified compared to *JVET-O0449* method, depending on reconstructed samples availability. The region of decoded reference samples of current WxH luma CB is extended towards the above-right side if available, up to W additional columns. It is extended towards the bottom-left side if available, up to H additional rows.

### Occurrence Based Intra Coding (OBIC)

The occurrence-based intra coding (OBIC), proposed in JVET-AH0076 (JVT-AH0076, EE2-2.2: Occurrence-based intra coding (OBIC), R. G. Youvalari, M. Abdoli, A. Tissier, 34th meeting, Rennes, FR, 17-24 April 2024*),* derives the intra prediction modes of the current block based on the sample-wise occurrence of the intra modes in the spatial neighborhood of the block. For this, adjacent and non-adjacent spatial neighboring blocks are checked and the intra prediction modes of the blocks are collected into an occurrence histogram. Instead of Histogram of Gradients (HoGs) as in DIMD, the OBIC method uses the Histogram of Occurrences, which consists of the intra modes and their sample-wise occurrences. The occurrence values are calculated based on the number of samples that are coded in a certain intra prediction mode in that neighborhood. For example, if a uiWidth × uiHeight block is coded with an IPM mode, the occurrence of the mode in that block is calculated as:$Histogram \left[IPM\right] + = uiWidth \times uiHeight ;$

Where uiWidth and uiHeight are the width and height of a spatial neighboring block. The occurrences of the existing modes from the spatial neighborhood blocks are accumulated into the histogram.

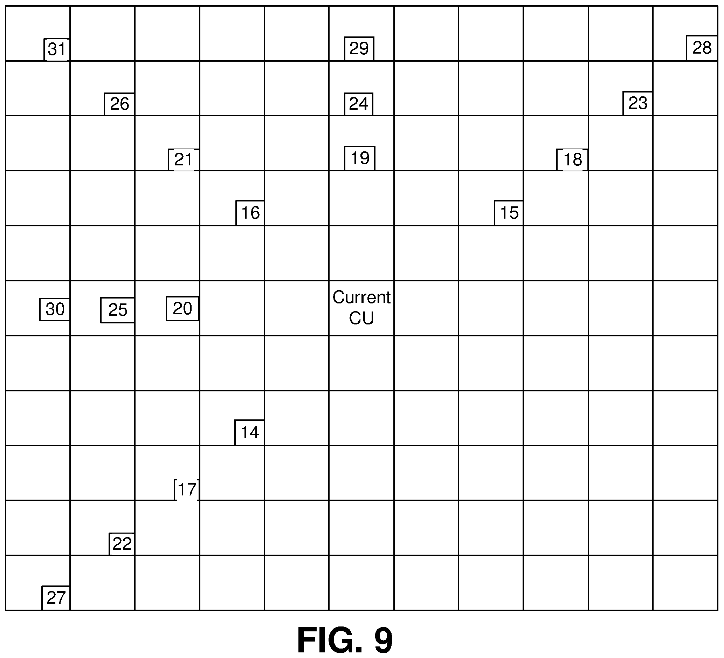

FIG. 9 shows the non-adjacent spatial neighboring blocks that are used in OBIC mode's histogram generation.

Up to five angular modes with the highest occurrence along with the planar mode or block vector-based prediction (same as in DIMD) are selected from the histogram and used for final prediction by blending the prediction of the selected modes.

Some blocks, mentioned below, use more than one intra mode for prediction. In such cases, all the intra modes of such blocks are selected and used when creating the OBIC histogram:
- DIMD: up to 5 angular modes
- TIMD: up to 2 modes
- SGPM: 2 modes
- OBIC: up to 5 angular modes

Moreover, the virtual intra prediction modes (VIPMs) of following blocks are considered only in inter slices when creating the histogram of OBIC mode:
- MIP block
- IntraTMP block
- EIP block

The blending weights are calculated similar to the DIMD mode, but instead of using gradient values from the template, the occurrence values are used for OBIC. Moreover, the planar mode's weight is also decided similar to DIMD mode.

The OBIC mode is used as a sub-mode of DIMD tool and is applied to only luma blocks. Moreover, the mode is disabled for blocks that have less than 64 samples.

### Fusion for Template-based Intra Mode Derivation (TIMD)

For each intra prediction mode in MPMs, as well as the wide-angle modes if the above-right and/or bottom-left reference samples are available, SATD between the prediction and reconstruction samples of the template is calculated. First two intra prediction modes with the minimum SATD and one non-angular intra prediction mode (i.e. DC or Planar) with the lowest SATD cost are selected as the TIMD modes. These three TIMD modes are fused with the weights after applying PDPC (Position Dependent Prediction Combination) process, and such weighted intra prediction is used to code the current CU. Position dependent intra prediction combination (PDPC) is included in the derivation of the TIMD modes.

The conditions below are checked to determine whether the non-angular intra prediction mode is used in fusion:
- the non-angular intra prediction mode is different from the two selected intra prediction modes.
- costMode3 < 1.5 × costMode1, where the costMode3 is the SATD cost of the non-angular intra prediction mode and costMode1 is the SATD cost of the first intra prediction mode.

If both of the conditions are true, three intra prediction modes are used to generate the prediction. And the weights of each intra prediction mode are computed from SATD cost: ${weight}_{i} = \frac{sumSATD - {costMode}_{i}}{2 \times sumSATD} , sumSATD = {\sum }_{j = 1}^{3} {costMode}_{i} .$

Otherwise, the non-angular intra prediction mode is not used in prediction, and the costs of the two selected modes are compared with a threshold, in the test the cost factor of 2 is applied as follows:
costMode2 < 2 × costMode1, where the costMode1 is the SATD cost of the first intra prediction mode and costMode2 is the SATD cost of the second intra prediction mode.

If this condition is true, the fusion is applied, otherwise the only mode1 is used.

Weights of the modes are computed from their SATD costs as follows: $weight 1 = costMode 2 / \left(costMode1+costMode2\right)$ $weight 2 = 1 - weight 1$

The division operations are conducted using the same lookup table (LUT) based integerization scheme used by the CCLM.

Besides, location-dependent sample-based fusion used in DIMD fusion process is used for the TIMD fusion but the location-dependent criterion applying to amplitudes of the selected predictors is replaced by a SATD cost-based criteria. The location-dependent criterion is determined from a ratio of the normalized SATD of the selected TIMD predictors computed in above and left template area.

In ECM encoder combination of TIMD and ISP (for Intra Sub Partitions) (TIMD-ISP), and the combination of TIMD and MRL (for Multiple Reference Line) (TIMD-MRL) are disabled.

### Spatial Geometric Partitioning Mode (SGPM)

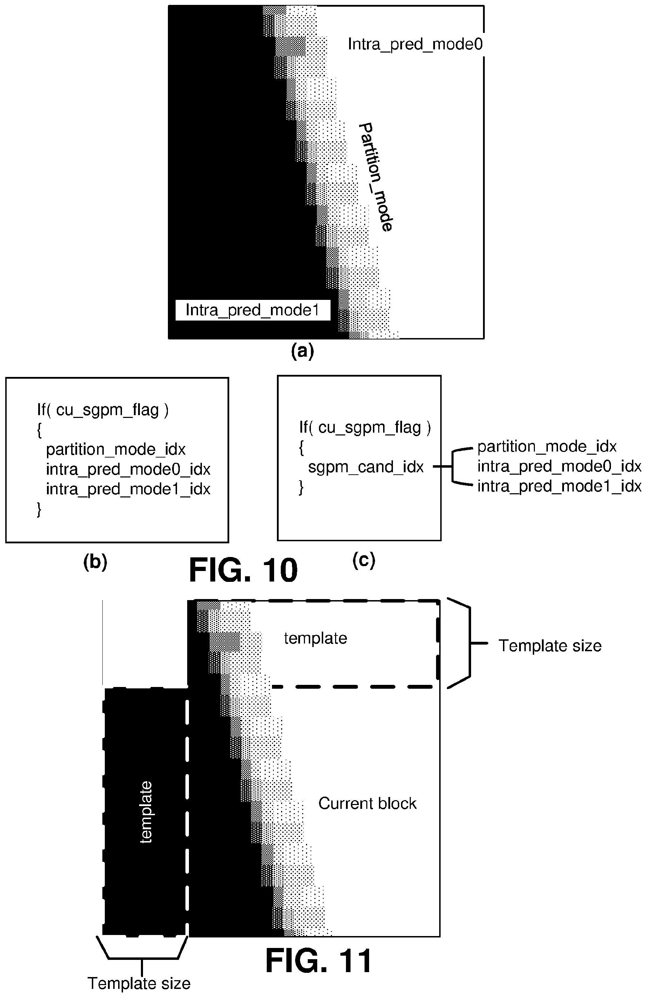

SGPM is an intra mode that resembles the inter coding tool of GPM, where the two prediction parts are generated from intra predicted process. In this mode, a candidate list is built with each entry containing one partition split and two intra prediction modes as shown in FIG. 10. 26 partition modes and 9 of intra prediction modes are used to form the combinations. the length of the candidate list is set equal to 16. The selected candidate index is signalled.

The list is reordered using template (FIG. 11) where SAD between the prediction and reconstruction of the template is used for ordering. The template size is fixed to 1.

For each partition mode, an IPM list is derived for each part using the same intra-inter GPM list derivation for IPM candidate list as described in JVET-AJ2025 (Section 3.2.26.3). The IPM list size is set to 3. In the list, TIMD derived mode is replaced by 2 derived modes with horizontal and vertical orientations. The list is further augmented with block-vector based prediction candidates obtained from the adjacent and non-adjacent merge candidates coded in IntraTMP or IBC mode. The template cost is employed to select the up to 6 block vectors. The final list contains up to 9 predictors: 3 regular intra modes and up to 6 block vectors-based predictors.

The SGPM mode is applied with a restricted blocks size: 4≤width≤64, 4≤height≤64, width<height × 8, height<width × 8, width × height≥32.

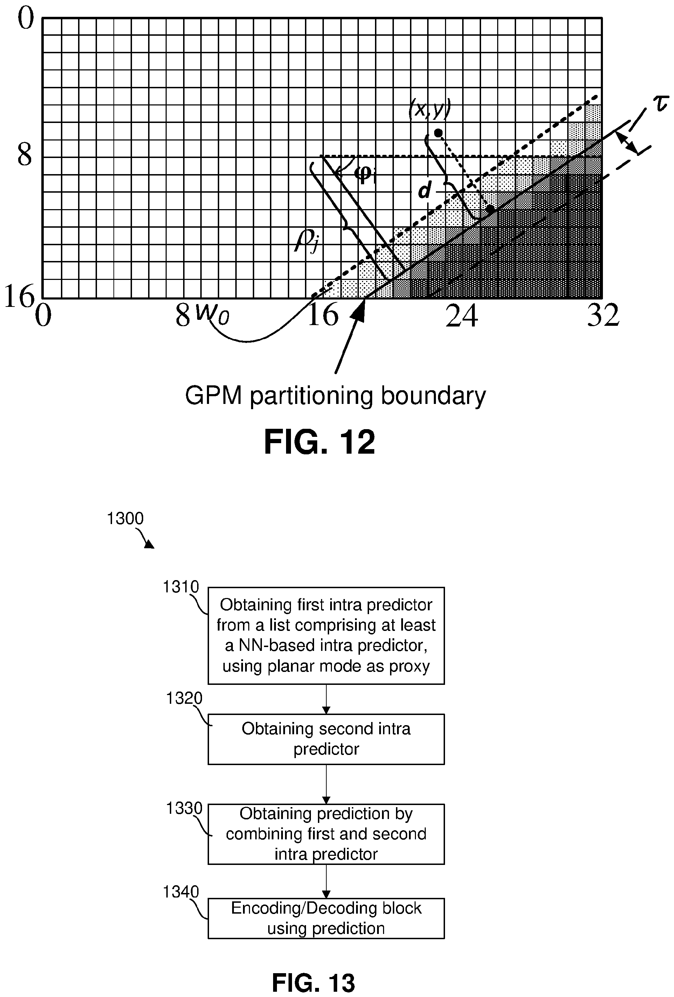

A PPS flag is coded to indicate whether no blending of two intra predictions is allowed. When this PPS flag is set to false, the following adaptive blending is also used for spatial GPM, where blending depth τ shown in FIG. 12 is derived as follows:
- If min(width, height)==4, 1/2 τ is selected
- else if min(width, height)==8, τ is selected
- else if min(width, height)==16, 2 τ is selected
- else if min(width, height)==32, 4 τ is selected
- else, 8 τ is selected.

Otherwise (the PPS flag is set to true), 1/4 τ is always used for spatial GPM coded blocks to make sure no blending is used when SGPM block has partition angle completely horizontal or vertical, and much narrower blending width is used when SGPM block has other partition angles. It is noted that the flag is set to true in current Common Test Conditions (CTC) for the screen content videos.

The neural network-based intra prediction (NN intra) has been recently introduced to ECM. It represents a powerful intra mode with a prediction characteristics that resembles a planar intra prediction. It can be considered therefore as an advance planar mode with much more powerful prediction mechanism, thanks to its neural network training part.

In order to further deploy neural network-based intra prediction, embodiments provided herein use the neural network-based intra prediction in combination with compound intra prediction mode, for example the template based intra tools such as TIMD, DIMD, SGPM, etc.

In the document, a compound intra prediction mode is a prediction mode that combines a plurality of intra prediction modes to generate the final prediction block. For example, such compound intra prediction mode can be the prediction modes described above: TIMD, OBIC, DIMD, SGPM.

However, it is not straightforward to evaluate the neural network-based intra prediction on the reconstructed template, as it requires lots of multiplication and also many template lines. Some embodiments provide a method wherein the planar mode is considered as a proxy to neural network-based intra prediction for the template evaluation.

Some embodiments provide a method for encoding or decoding a block in an image or a video using a compound intra prediction mode wherein when a planar mode is used in the compound prediction intra mode to generate the final prediction, the planar mode is replaced by a neural network-based intra prediction mode. In some variants, when template cost calculation is involved in the determining of the intra predictions modes used in the compound intra prediction mode, the template cost calculation is carried out by considering the planar mode as a proxy of to neural network-based intra prediction mode.

FIG. 13 illustrates embodiments of a method for encoding or decoding a block of an image or a video.

In a compound intra prediction mode, a plurality of intra predictors is determined from one or more lists of intra prediction candidates and combined to generate a prediction to predict a block to encode or decode. The lists of intra prediction candidates can be constructed in different ways depending on the compound intra prediction mode. Also, the number of intra predictors in the plurality depends on the compound intra prediction mode. Examples of such compound intra prediction modes are described above.

In the embodiments described herein, the neural network-based intra prediction mode is added to the list of intra prediction candidates for determining one of the intra predictors used in the prediction generated by the compound intra prediction mode.

In a variant, a proxy or a representative for the neural network-based intra prediction mode is sued when this candidate is evaluated. For example, when a template cost has to be determined for an intra prediction candidate in the list to select a best intra predictor from the list, the representative of the neural network-based intra prediction mode is used for evaluating the template cost. In a variant, the representative of the neural network-based intra prediction mode is the planar mode. Therefore, in this variant, the template cost associated with the neural network-based intra prediction candidate is determined as if the intra predictor is the planar mode.

When generating the final prediction of the compound intra prediction mode, if an intra predictor selected from the list of intra prediction candidates is the intra prediction mode used as a representative for the neural network-based intra prediction candidate, then the representative is replaced with the neural network-based intra prediction mode and the final prediction is generated using the neural network-based intra prediction mode.

In a variant of this embodiment, the intra prediction mode used as a representative for the neural network-based intra prediction candidate can also be a candidate in the list of the intra prediction candidates. As both modes are candidates in the list of intra prediction candidates, to select an intra predictor when using template cost, the template cost associated with the intra prediction candidates can be penalized or amplified by a scale factor.

FIG. 13 illustrates a method 1300 for encoding or decoding a block in an image or a video using a compound intra prediction mode according to an embodiment. At 1310, a first intra predictor is obtained from among a first set of intra predictors (i.e. a list of intra prediction candidates). In this embodiment, the first set of intra predictors comprises at least one intra predictor which is a neural-network-based intra predictor.

At 1320, at least one second intra predictor is obtained from among a second set of intra predictors. As described above, the construction of the first set of intra predictors, of the second set of intra predictors, and the number of intra predictors to obtain depend on which compound intra prediction mode is considered here.

Depending on the compound intra prediction mode, at 1310, obtaining the first intra predictor from among the first set of intra predictors comprises applying an intra predictor of the first set of intra predictors on a template of the block and determining a distortion cost on the template of the block.

When the intra predictor is the neural-network-based intra predictor, then a representative is used, for example the planar mode is used as a representative of the neural-network-based intra predictor for determining the distortion cost. That is the distortion cost determined for the neural-network-based intra predictor is determined by applying the planar mode to the template of the current block.

At 1330, a prediction is obtained by combining the first intra predictor and the at least one second intra predictor. At 1340, the block is encoded or decoded/reconstructed using the prediction obtained at 1330.

Further variants of the embodiments are described below.

### Neural-network-based intra prediction used in TIMD mode

This variant is about introducing the neural-network-based intra prediction into TIMD mode. In the current TIMD design, a non-angular mode (planar or DC) is selected according to the template cost and blended with 2 other modes derived from the template analysis. To introduce the neural-network-based intra prediction in TIMD, the planar mode is considered as a representative of the neural-network-based intra prediction.

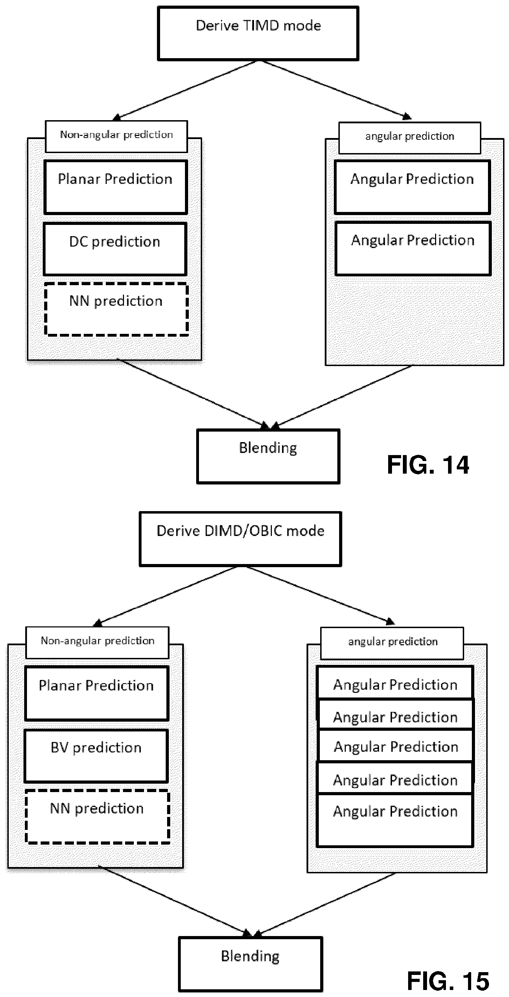

FIG. 14 illustrates an example of TIMD modifications for adding the neural-network-based intra prediction in TIMD mode.

For example, in reference with FIG. 13 described above, the first intra predictor that is obtained correspond to the non-angular mode and the at least one second intra predictor corresponds to the 2 other modes derived from the template analysis (angular prediction in FIG. 14). In a variant, the first set of intra predictors (non-angular prediction in FIG. 14) comprises the neural network based intra prediction mode (replacing the planar mode) and the DC mode. Then at 1310, to the obtain the first intra predictor, the following is performed. DC prediction and planar prediction are performed on the reconstructed template of the current block to encode/decode and the template cost of planar mode and DC mode is evaluated. The best mode is selected, that is the mode that provides the minimum template cost. If the planar mode is selected as the best mode, the planar mode is replaced with the neural-network-based intra prediction in the prediction of current block at 1330.

Compared to the planar mode, the neural-network-based intra prediction is rather slow mode because of the amount multiplication required for the prediction process. Therefore, replacing the planar mode by the neural-network-based intra prediction without restriction can increase significantly the decoding time. Therefore, variants are described below to limit this increase.

In a variant, the planar mode is considered if it is significantly better than DC mode.

In this variant, the planar mode is also part of the first set of intra predictors.

In this variant, a threshold is used to select between DC, planar and neural-network-based intra prediction. Specifically, if the DC cost is less than planar mode, DC is considered. Otherwise, if planar mode cost is less than "k" times the DC cost (k>1), planar is selected, otherwise, neural-network-based intra prediction is selected. The rationale behind it is that when planar cost is much less than DC cost, planar is already a good mode and there is no need to replace it by neural-network-based intra prediction. This reduces the usage of neural-network-based intra prediction and therefore does not increase the decoder time. The variant is summarized as follows. DC and planar prediction are performed on the reconstructed template. The template cost of planar (C_planar) and DC (C_dc) modes are evaluated. If C_planar > C_dc, then the DC mode is selected. Else if C_planar < k×C_dc, then the planar mode is selected, else the neural-network-based intra prediction is selected.

In another variant, the neural-network-based intra prediction is considered if the planar mode is slightly worse than the DC mode.

In this variant, a threshold is used to select between DC, planar and neural-network-based intra prediction. Specifically, if the planar cost is less than the cost associated with the DC mode, the planar mode is selected. Otherwise, if the DC mode cost is less than "k" times the planar cost (k>1), the DC mode is selected, otherwise, the neural-network-based intra prediction is selected. The rationale behind it is that when DC cost is much less than planar cost, DC is a good mode for predicting the current block. However, when the template cost between planar and DC is not significantly different, neural-network-based intra prediction is preferred for the current block. The variant is summarized as follows. DC and planar predictions are performed on the reconstructed template. The template cost of planar (C_planar) and DC (C_dc) modes are evaluated. If C_planar < C_dc, then, the planar mode is selected, else if C_dc < k×*C_planar, then the DC mode is selected, else the neural-network-based intra prediction is selected.

### Neural-network-based intra prediction used in DIMD mode or OBIC mode

This variant is about introducing neural-network-based intra prediction into DIMD mode or OBIC mode. In the current DIMD and OBIC design, a non-angular mode (planar or block vector-based mode) is selected according to the template cost and blended with up to 5 other modes derived from the template analysis (based on histogram of oriented gradients in DIMD and histogram of occurrences in OBIC). To introduce the neural-network-based intra prediction in DIMD/OBIC, the planar mode is considered as a representative of the neural-network-based intra prediction.

FIG. 15 illustrates an example of DIMD/OBIC modifications for adding the neural-network-based intra prediction in DIMD or OBIC mode.

For example, in reference with FIG. 13 described above, the first intra predictor that is obtained correspond to the non-angular mode and the at least one second intra predictor corresponds to the 5 other modes derived from the template analysis (angular prediction in FIG. 15). In a variant, the first set of intra predictors (non-angular prediction in FIG. 15) comprises the neural network based intra prediction mode (replacing the planar mode) and the block vector-based mode (BV prediction). Then at 1310, to the obtain the first intra predictor, the following is performed. Planar prediction and all BV-based predictions are performed on the reconstructed template of the current block to encode/decode. The template cost of planar mode and all BV based predictions are evaluated. If the planar mode is selected as best mode (i.e. it has the minimum or lowest template cost), the planar mode is replaced with the neural-network-based intra prediction in the prediction of current block at 1330.

Compared to planar, the neural-network-based intra prediction is rather slow mode because of the amount multiplication required for the prediction process. Therefore, replacing planar by the neural-network-based intra prediction without restriction can increase significantly the decoding time. Therefore, some variants are described below.

In a variant, the planar mode is considered if it is significantly better than BV modes. In this variant, a threshold is used to select between BV, planar and the neural-network-based intra prediction. Specifically, if the BV cost is less than planar mode, BV is considered. Otherwise, if planar mode cost is less than "k" times the BV cost (k>1), the planar mode is selected, otherwise, the neural-network-based intra prediction is selected. The rationale behind it is that when planar cost is much less than BV cost, planar is already a good mode and there is no need to replace it by the neural-network-based intra prediction. This reduces the usage of the neural-network-based intra prediction and therefore does not increase the decoder time. The variant is summarized as follows. Planar prediction and all BV predictions are performed on the reconstructed template of the current block. The template cost of the planar mode (C_planar) and all BV predictions are evaluated. The BV providing the minimum cost (C_bv) of among all BV prediction modes is selected for comparison with planar cost. If C_planar > C_bv, then the BV prediction (corresponding to the minimum BV cost) is selected, else if C_planar < k×C_dc then the planar mode is selected, else the neural-network-based intra prediction is selected.

In another variant, the neural-network-based intra prediction is considered if the planar mode is slightly worse than BV mode. In this variant, a threshold is used to select between BV, planar and the neural-network-based intra prediction. Specifically, if the planar cost is less than BV mode, the planar mode is considered. Otherwise, if BV mode cost is less than "k" times the planar cost (k>1), the planar mode is selected, otherwise, the neural-network-based intra prediction is selected. The rationale behind it is that when BV cost is much less than planar cost, BV is a good mode for predicting the current block. However, when the template cost between planar and BV is not significantly different, the neural-network-based intra prediction is preferred for the current block. The variant is summarized as follows. Planar prediction and all BV predictions are performed on the reconstructed template of the current block. The template cost of planar (C_planar) and all BV modes are evaluated. The BV mode providing the minimum cost (C_bv) of among all BV prediction modes is selected for comparison with planar cost. If C_planar < C_bv, then the planar mode is selected, else if C_bv < k×C_planar, then the BV mode corresponding to the minimum cost C_bv is selected, else the neural-network-based intra prediction is selected.

### Neural-network-based intra prediction used in SGPM mode

This variant is about introducing the neural-network-based intra prediction into SGPM mode. In the current SGPM design, regular and BV based modes are evaluated on the reconstructed template, along with a split line. Up to 16 combinations of best 2 predictors and split line are kept and an index is signaled to indicate which mode is selected. To introduce the neural-network-based intra prediction in SGPM, the planar mode is considered as a representative of the neural-network-based intra prediction.

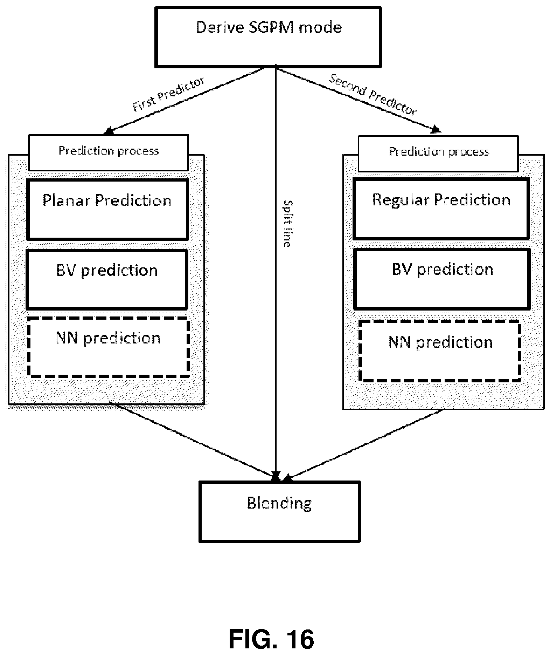

FIG. 16 illustrates an example of SGPM modifications for adding the neural-network-based intra prediction in SGPM mode. In this variant, the neural-network-based intra prediction is added in any of the two lists of intra predictor candidates or in both lists.

For example, in reference with FIG. 13 described above, the first intra predictor that is obtained correspond to the first predictor for the first partition of the current block and the at least one second intra predictor corresponds to the second predictor for the second partition of the current block. In a variant, the first set of intra predictors comprises the neural network based intra prediction mode (replacing the planar mode) and the BV prediction mode. In another variant, the same is done for the second set of intra predictors. Then at 1310, to the obtain the first intra predictor and/or the second intra predictor, the following is performed. The same SGPM template analysis is performed as in the current SGPM design to obtain the combinations of 2 intra modes from the first set of intra predictors and the second set of intra predictors and the split line, using the planar mode when evaluating the neural-network-based intra prediction. If the planar mode is selected as one of the two intra modes, then the planar mode is replaced with the neural-network-based intra prediction in the prediction of the current block at 1330.

Compared to planar, the neural-network-based intra prediction is rather slow mode because of the amount multiplication required for the prediction process. Therefore, replacing the planar mode by the neural-network-based intra prediction without restriction can increase significantly the decoding time. Therefore, some variants are described below.

A variant prevents from using twice the neural-network-based intra prediction. In order to reduce the decoding time, the combination where the neural-network-based intra prediction is performed on the two partitions is disallowed, i.e. not allowed.

In another variant, the template cost associated with the planar mode is increased. The template cost of the planar mode can be amplified by a value "k" (k>1)such that the planar mode is less selected by the template analysis, and therefore the neural-network-based intra prediction is performed less for the final prediction.

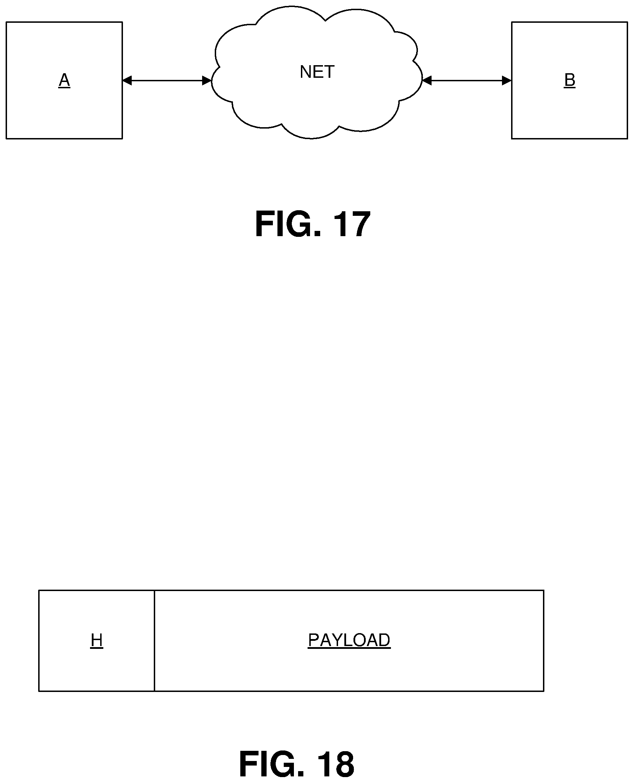

In an embodiment, illustrated in FIG. 17, in a transmission context between two remote devices A and B over a communication network NET, the device A comprises a processor in relation with memory RAM and ROM which are configured to implement a method for encoding an image or a video according to any one of the embodiments described herein and the device B comprises a processor in relation with memory RAM and ROM which are configured to implement a method for decoding an image or a video according to any one of the embodiments described herein. In accordance with an example, the network is a broadcast network, adapted to broadcast/transmit a coded video from device A to decoding devices including the device B.

FIG. 18 shows an example of the syntax of a signal transmitted over a packet-based transmission protocol. Each transmitted packet P comprises a header H and a payload PAYLOAD. In some embodiments, the payload PAYLOAD may comprise data representative of the block of an image or a video encoded according to any one of the embodiments described above. The payload can also comprise any signaling as described above.

In addition, in some variants, using the neural-network-based intra prediction in one of a compound intra prediction mode described above is enabled or disabled using a flag signaled at a high-level, for example at PPS, SPS, APS, picture or slice level. In another variant, the flag can be signaled at the block level. In these variants, the signal comprises a flag for enabling or disabling use of neural-network-based intra prediction in a compound intra prediction mode.

The flag can be signaled once for all compound intra prediction modes. For example, a same flag enables or disables use of neural-network-based intra prediction for DIMD, OBIC, TIMD and SGPM.

In another variant, the flag is specific to a compound intra prediction mode. Therefore, in this variant, a flag for each compound intra prediction mode that could use neural-network-based intra prediction is signaled. In this way, use of neural-network-based intra prediction can be enabled for one compound intra prediction and disabled for another compound intra prediction mode. For example, the signal comprises at least one of a flag enabling or disabling use of neural-network-based intra prediction for DIMD, a flag enabling or disabling use of neural-network-based intra prediction for OBIC, a flag enabling or disabling use of neural-network-based intra prediction for TIMD, or a flag enabling or disabling use of neural-network-based intra prediction for SGPM.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to FIGs. 2 and 3 may be implemented as one or more modules and modified according to the various embodiments of the present disclosure.

The various embodiments described herein provide at least the following features, devices or aspects, alone or on any combination, across various claim categories and types:
i. Encoding, into coded video data, syntax elements that can enable the decoder to decode the coded video data, according to any of the embodiments described herein.
ii. A bitstream that includes one or more of the described syntax elements, or variations thereof, whether transmitted, stored, or otherwise made available.
iii. Creating, transmitting, receiving, and/or decoding of the bitstream.
iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. **In** some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:
i. session description protocol (SDP), for example as described in RFCs and/or used in conjunction with real-time transport protocol (RTP) transmission.
ii. hypertext transfer protocol (HTTP) live Streaming (HLS) manifest transmitted over HTTP.
iii. dynamic adaptive streaming over HTTP (DASH) media presentation description (MPD) descriptors, for example as used in DASH and transmitted over HTTP.
iv. RTP header extensions, for example as used during RTP streaming.
v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter is used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), a bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

## Claims

1. A method comprising, for a current block of an image of a video:
Obtaining a first intra predictor from among a first set of intra predictors, the first set of intra predictors comprising at least one intra predictor being a neural-network-based intra predictor,
Obtaining at least one second intra predictor, from among a second set of intra predictors,
Obtaining a prediction for the current block by combining the first intra predictor and the at least one second intra predictor,
Decoding the current block based on the prediction.

2. The method of claim 1, wherein obtaining the first intra predictor from among the first set of intra predictors comprises determining a distortion cost on a template of the current block when applying an intra predictor of the first set of intra predictors on the template of the current block.

3. The method of claim 2, wherein a planar mode is used as a representative of the neural-network-based intra predictor for determining the distortion cost for the neural-network-based intra predictor.

4. The method of claim 2, wherein determining the distortion cost for the neural-network-based intra predictor comprises applying a planar mode to the template of the current block.

5. The method of claim 3 or 4, wherein responsive to a determination that a lowest distortion cost is provided by applying the planar mode to the template of the current block, the neural-network-based intra predictor is selected as the first intra predictor.

6. The method of claim 3 or 4, wherein the first set of intra predictors includes the planar mode and another intra prediction mode, and wherein
if a distortion cost provided by the other intra prediction mode is lower than the distortion cost provided by the planar mode, then the other intra prediction mode is selected as the first intra predictor,
else if the distortion cost provided by the planar mode is k times lower than the distortion cost provided by the other intra prediction mode, then the planar mode is selected as the first intra predictor,
else the neural-network-based intra predictor is selected as the first intra predictor.

7. The method of claim 3 or 4, wherein the first set of intra predictors includes the planar mode and another intra prediction mode, and wherein
if the distortion cost provided by the planar mode is lower than the distortion cost provided by the other intra prediction mode, then the planar mode is selected as the first intra predictor,
else if the distortion cost provided by the other intra prediction mode is lower than k times the distortion cost provided by the planar mode, then the other intra prediction mode is selected as the first intra predictor,
else the neural-network-based intra predictor is selected as the first intra predictor.

8. The method of any of claims 6 or 7, wherein the other intra prediction mode is a DC mode or a block-vector-based mode.

9. The method of any of claims 6 or 7, wherein the first set of intra predictors comprises a plurality of block-vector-based modes and wherein the other intra prediction mode is a block-vector-based mode from the plurality of block-vector-based modes that provides a lowest distortion cost.

10. The method of any one of claims 1-9, wherein combining the first intra predictor and the at least one second intra predictor comprises determining a weighted sum of the first intra predictor and the at least one second intra predictor.

11. The method of claim 3 or 4, wherein obtaining the first intra predictor from among the first set of intra predictor comprises:
reordering the first set of intra predictors according to distortion costs determined on the template of the current block,
determining a distortion cost on the current block for a given number of first ordered intra predictors in the first set of intra predictors, and
selecting an intra predictor among the given number of first ordered intra predictors that provides a lowest distortion cost on the current block,
wherein responsive to a determination that the intra predictor selected is the planar mode, the neural-network-based intra predictor is selected as the first intra predictor.

12. The method of claim 11, wherein responsive to a determination that the neural-network-based intra predictor is selected as the first intra predictor, using the neural-network-based intra predictor is disabled for the second intra predictor.

13. The method of claim 11 or 12, wherein reordering the first set of intra predictors according to distortion costs determined on the template of the current block comprising scaling a distortion cost provided by applying the planar mode by scale factor greater than 1.

14. The method of any one of claims 1-4 or 11-13, wherein the prediction for the current block is split by a partition split line providing a first partition and a second partition, and wherein combining the first intra predictor and the at least one second intra predictor comprises generating a first prediction for the first partition using the first intra predictor, and generating a second prediction for the second partition using the second intra predictor.

15. The method of claim 1, wherein a prediction mode of the current block is one of a Decoder side Intra Mode Derivation prediction mode, an Occurrence based Intra Coding prediction mode, a Template-based Intra Mode Derivation prediction mode or a Spatial Geometric Partitioning Mode.
